# DEMANDE DE BREVET EUROPEEN

(11) **EP 1 367 555 A1**
(43) Date de publication de la demande: **03.12.2003**
(21) Numéro de dépôt: 02012075.4
(22) Date de dépôt: 31.05.2002
(51) Int. Cl.: G08B 13/24, G06K 19/077

(54) **Etiquette electronique antivol**

(71) Demandeur: KHEPHREN SA, F-90000 Belfort (FR)
(72) Inventeur: MONNIER, Jean-Claude, 90130 Petit-croix (FR); COTTIN, Nathanael, 25200 Montbeliard (FR); HANSZ, Bernard, 25600 Nommay (FR); MIGNOT, Bernard, 90120 Morvillars (FR); WACK, Maxime, 90000 Belfort (FR); SOUABNI, Moez, 2026 Sidi Bousaid (TN)
(74) Mandataire: Nithardt, Roland

(57) **Abrégé**

L'invention concerne une étiquette électronique antivol comportant un substrat (11) sur lequel sont déposés, d'une part, un dispositif constitué d'une couche magnétique (12) sous la forme d'un mini-disque compact (19) permettant l'enregistrement et la restitution optiques des données et, d'autre part, au moins un élément magnétique (13) permettant une détection à distance par un détecteur magnétique. Le dispositif d'enregistrement et de restitution (12) comporte un programme auto-exécutable agencé pour assurer une connexion à une base de données au moment de l'introduction dans un lecteur optique. Cette étiquette est particulièrement adaptée pour servir de support aux différentes étiquettes apposées sur les produits distribués dans le commerce et pour l'horodatage et l'archivage de la garantie de ces produits en vue d'une meilleure protection contre une falsification.

## Description

La présente invention concerne une étiquette électronique antivol pour un article à vendre notamment dans une surface commerciale, cette étiquette comportant au moins un élément magnétique pour une détection à distance par un détecteur magnétique.

Dans le commerce, les garanties des articles vendus sont habituellement établies sur des supports en papier. Elles sont par conséquent sujettes à la falsification et à des usages abusifs. Une garantie falsifiée ouvre illégalement droit à une assistance technique gratuite, à un dépannage et à un service après-vente gratuits ainsi qu'à un éventuel échange ou un remboursement illégal de l'article vendu. Par ailleurs, sur certains articles, les étiquettes portant un antivol, un code à barres ou un prix sont directement apposées sur les articles. Toutefois, ces étiquettes sont fixées de manière disparate. En outre, l'état de surface de l'article n'offre pas toujours une bonne adhérence et les étiquettes ont tendance à se décoller au bout d'un certain temps.

De ce fait, l'établissement de la garantie sur un support en papier constitue une faille dans la protection contre la fraude et entraîne des pertes énormes pour les fabricants et les magasins de vente. En outre, la mise en place des étiquettes est coûteuse et les temps de lecture des codes à barres ou du prix sont plus longs, ce qui occasionne de longs délais de traitement lors de la vente des articles.

Le but de la présente invention est de pallier ces inconvénients en fournissant une étiquette électronique permettant de regrouper l'ensemble des données commerciales sur un support adéquat et de numériser les garanties sur une base de données afin de les rendre infalsifiables.

Ce but est atteint par l'étiquette selon l'invention telle définie en préambule et
caractérisée en ce qu'elle comprend un substrat comportant, d'une part, un corps principal sur lequel sont déposés des moyens d'enregistrement et de stockage optiques de données sous la forme d'un mini-disque compact et, d'autre part, un talon détachable portant des données correspondant audit article.

Selon un mode de mode de réalisation préféré, lesdits moyens d'enregistrement et de stockage optiques de données peuvent comprendre un programme auto-exécutable agencé pour assurer une connexion avec une base de données contenant des informations relatives audit article, au moment de l'introduction de l'étiquette dans un lecteur optique.

De préférence lesdits moyens d'enregistrement et de stockage optiques de données comprennent également au moins un logiciel agencé pour permettre un horodatage au moment de l'introduction de l'étiquette dans un lecteur optique, au moins un logiciel agencé pour permettre un archivage du numéro de série de l'article vendu au moment de l'introduction de l'étiquette dans un lecteur optique et au moins un logiciel agencé pour permettre l'enregistrement de l'identité et l'adresse de l'acheteur au moment de l'introduction de l'étiquette dans un lecteur optique.

De façon avantageuse, lesdits moyens d'enregistrement et de stockage optiques de données sont agencés pour mémoriser des informations commerciales et/ou des informations techniques au moment de l'introduction de l'étiquette dans un lecteur optique.

Dans une première forme de réalisation ledit corps principal et ledit talon détachable de l'étiquette sont solidaires. Ils peuvent également être constitués de deux composants distincts.

Selon une variante de réalisation, ledit corps principal est logé dans une pochette et ledit talon détachable est solidaire de ladite pochette.

De façon avantageuse, ledit talon détachable peut comporter au moins une plage portant un circuit imprimé détectable à distance par un détecteur magnétique, une plage portant une étiquette de code à barres correspondant à des informations relatives à l'article vendu et une plage portant une étiquette portant le prix de l'article vendu.

La présente invention et ses avantages seront mieux compris à la lecture de la description détaillée de l'invention, en référence aux dessins annexés donnés à titre indicatif et non limitatif, dans lesquels :
- la figure 1 est une vue de dessus de l'étiquette selon l'invention,
- la figure 2 est une vue en coupe longitudinale de l'étiquette de la figure 1,
- la figure 3 représente une variante de l'étiquette selon l'invention, et
- la figure 4 est une vue en coupe longitudinale de l'étiquette de la figure 3.

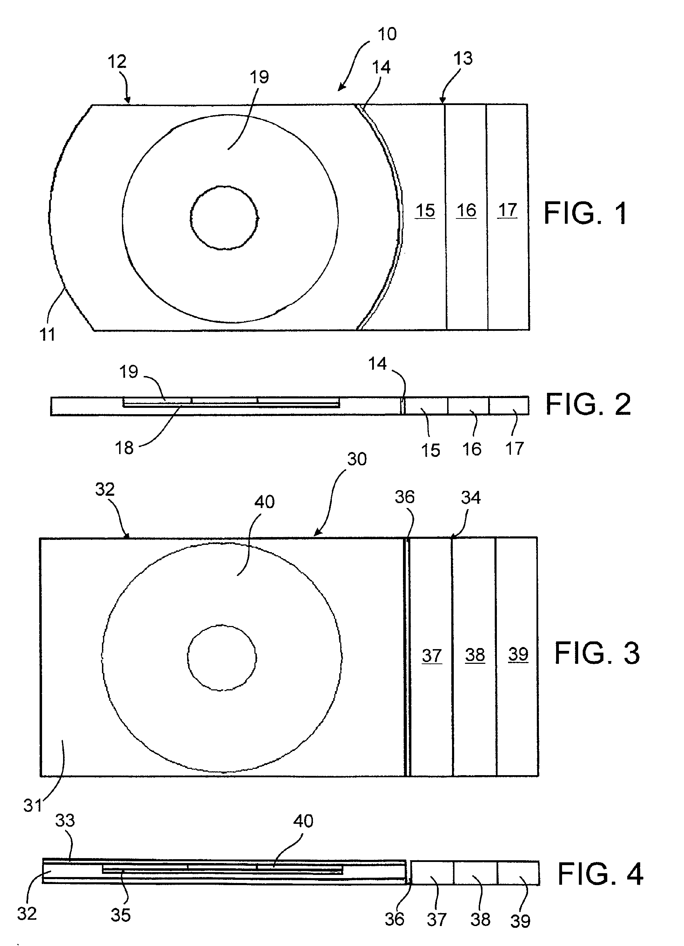

En référence aux dessins, et en particulier aux figures 1 et 2, l'étiquette 10 selon l'invention comporte un substrat 11 constituant un corps central 12 et un talon détachable 13, ce talon étant rattaché au corps central 12 par une zone de rupture de moindre épaisseur 14. Le talon 13 porte plusieurs plages 15, 16 et 17 dont les fonctions seront décrites ci-dessous.

Le talon détachable 13 avec les plages 15, 16 et 17 sert de support à un ensemble d'informations ou de données qui sont habituellement mentionnées sur des étiquettes apposées sur les articles vendus. Chaque plage du talon porte une étiquette collée en surface ou logée dans l'épaisseur de la matière. La première plage 15 porte par exemple un circuit imprimé logé dans l'épaisseur du talon 13, réalisé par sérigraphie et détectable à distance par un détecteur magnétique. Cette plage 15 constitue un antivol pour l'article concerné. La deuxième plage 16 comporte par exemple un code à barres définissant un ensemble de données de fabrication ou de données commerciales concernant l'article. La troisième plage 17 porte par exemple le prix de l'article. Le talon 13 est détachable du substrat 11 au niveau de la zone de rupture de moindre épaisseur 14.

Le corps central 12 porte une couche de polycarbonate 18 sur laquelle sont formés des moyens agencés pour permettre l'enregistrement et la restitution optiques de données. Lesdits moyens constituent une unité de mémoire sous la forme d'un mini-disque compact 19 Ces données enregistrées sur ce mini-disque compact comprennent des logiciels auto-exécutables permettant une connexion à une base de données du fabricant ou du distributeur de l'article commercialisé, dans laquelle est notamment archivée la garantie correspondant à l'article. Parmi ces données peuvent en outre figurer le catalogue, la fiche technique et le mode d'emploi de l'article concerné.

A l'utilisation, le talon 13 est détaché par les services commerciaux lors de la vente de l'article. L'introduction du corps central 12 portant le mini-disque compact 19 dans un lecteur optique permet l'exécution automatique d'un des logiciels auto exécutables, notamment d'un logiciel de numérisation de la garantie, puis d'un logiciel de connexion à une base de données du fabricant ou du distributeur de l'article commercialisé. L'exécution de ces logiciels permet en outre l'horodatage et l'archivage du numéro de série de l'article vendu et de l'identité adresse de l'acheteur.

Ultérieurement, pour faire valoir la garantie de l'article, l'accès à ces données authentiques mémorisées dans la banque de données permet de vérifier le délai de validité de la garantie et l'authenticité de l'article couvert par cette garantie.

Les figures 3 et 4 illustrent une variante d'une étiquette antivol 30 comportant un substrat 31 qui constitue un corps central 32. Ce corps central est logé dans une pochette 33 à laquelle est attaché un talon 34. La pochette est de préférence en matière synthétique, par exemple transparente et a pour fonction de protéger ledit corps central 32 sur lequel est déposée une couche de polycarbonate 35. Sur cette couche de polycarbonate 35 est formé un mini-disque compact 40 qui porte une unité de mémoire comprenant des moyens d'enregistrement et de restitution optique de données. Le talon 34 est attaché à la pochette 33 par l'intermédiaire d'une zone de rupture de moindre épaisseur 36. Ce talon 34 est divisé en plusieurs plages 37, 38 et 39.

Comme dans le mode de réalisation décrit en référence aux figures 1 et 2, le talon 34 sert de support aux étiquettes de l'article vendu. La première plage 36 sert par exemple de support à un circuit imprimé logé dans l'épaisseur de ce talon par sérigraphie et détectable à distance par un détecteur magnétique. La deuxième plage 38 sert par exemple de support à l'étiquette du code à barres de l'article vendu et la troisième plage 39 sert par exemple à afficher le prix. La pochette 33 sert de protection et de support au mini-disque compact portant les moyens d'enregistrement et de stockage optiques des données. La zone de rupture 36 de moindre épaisseur permet de détacher le talon 34 de la pochette 33.

Le mini-disque compact permet l'enregistrement des logiciels auto-exécutables, du catalogue, de la fiche technique et du mode d'emploi de l'article auquel le dispositif est associé. L'exécution automatique de ces logiciels permet l'horodatage et la connexion à une base de données pour l'archivage de la garantie. Le logiciel permet d'archiver particulièrement le numéro de série de l'article vendu, les références de l'acheteur, la date et l'heure d'achat. L'archivage de ces données permet d'apporter une plus grande protection aux garanties en les rendant infalsifiables et en permettant l'accès à des données authentiques à tout moment.

## Revendications

1. Etiquette électronique antivol (10, 30) pour un article à vendre notamment dans une surface commerciale, cette étiquette comportant, au moins un élément magnétique pour une détection à distance par un détecteur magnétique, **caractérisée en ce qu'**elle comprend un substrat (11, 31) comportant, d'une part, un corps principal (12, 32) sur lequel sont déposés des moyens d'enregistrement et de stockage optiques de données sous la forme d'un mini-disque compact (19, 40) et, d'autre part, un talon (13, 34) détachable portant des données correspondant audit article.

2. Etiquette selon la revendication 1, **caractérisée en ce que** lesdits moyens d'enregistrement et de stockage optiques de données comprennent un programme auto-exécutable agencé pour assurer une connexion avec une base de données contenant des informations relatives audit article, au moment de l'introduction de l'étiquette dans un lecteur optique.

3. Etiquette selon la revendication 1, **caractérisée en ce que** lesdits moyens d'enregistrement et de stockage optiques de données comprennent au moins un logiciel agencé pour permettre un horodatage au moment de l'introduction de l'étiquette dans un lecteur optique.

4. Etiquette selon la revendication 1, **caractérisée en ce que** lesdits moyens d'enregistrement et de stockage optiques de données comprennent au moins un logiciel agencé pour permettre un archivage du numéro de série de l'article vendu au moment de l'introduction de l'étiquette dans un lecteur optique.

5. Etiquette selon la revendication 1, **caractérisée en ce que** lesdits moyens d'enregistrement et de stockage optiques de données comprennent au moins un logiciel agencé pour permettre l'enregistrement de l'identité et l'adresse de l'acheteur au moment de l'introduction de l'étiquette dans un lecteur optique.

6. Etiquette selon la revendication 1, **caractérisée en ce que** lesdits moyens d'enregistrement et de stockage optiques de données sont agencés pour mémoriser des informations commerciales et/ou des informations techniques au moment de l'introduction de l'étiquette dans un lecteur optique.

7. Etiquette selon la revendication 1, **caractérisée en ce que** ledit corps principal (12) et ledit talon détachable (13) sont solidaires.

8. Etiquette selon la revendication 1, **caractérisée en ce que** ledit corps principal (32) et ledit talon détachable (34) sont constitués de deux composants distincts.

9. Etiquette selon la revendication 8, **caractérisée en ce que** ledit corps principal (32) est logé dans une pochette (33) et **en ce que** ledit talon (34) détachable est solidaire de ladite pochette.

10. Etiquette selon la revendication 1, **caractérisée en ce** ledit talon détachable (13, 34) comporte au moins une plage (15, 37) portant un circuit imprimé détectable à distance par un détecteur magnétique.

11. Etiquette selon la revendication 1, **caractérisée en ce que** le talon détachable comporte au moins une plage (16, 38) portant une étiquette de code à barres correspondant à des informations relatives à l'article vendu.

12. Etiquette selon la revendication 1, **caractérisée en ce que** le talon comporte au moins une plage (17, 39) portant une étiquette portant le prix de l'article vendu.
